# EUROPEAN PATENT SPECIFICATION

(11) **EP 2 893 864 B1**
(45) Date of publication and mention of the grant of the patent: **28.02.2018**
(21) Application number: 15150214.3
(22) Date of filing: 06.01.2015
(51) Int. Cl.: A47L 15/42, D06F 39/00, F24C 7/08, F21V 31/00, F21V 33/00, F21W 131/30, D06F 39/14, F21Y 115/10

(54) **Home appliance having display unit**
Haushaltsgerät mit Anzeigeeinheit
Appareil domestique à unité d'affichage

(30) Priority: 06.01.2014 KR 20140001530
(43) Date of publication of application: 15.07.2015
(73) Proprietor: Samsung Electronics Co., Ltd., Gyeonggi-do 16677 (KR)
(72) Inventor: Kim, Sung Jin, Suwon-si Gyeonggi-do (KR); Joo, Jae Man, Yongin-si Gyeonggi-do (KR)
(74) Representative: Taor, Simon Edward William

(56) References cited:
- EP-A1- 1 411 408
- EP-A1- 1 702 551
- EP-A1- 2 455 930
- EP-A2- 1 970 479
- WO-A1-2004/008234
- WO-A1-2011/085940
- US-A- 5 453 586

## Description

Embodiments of the present disclosure relate to a home appliance having a hidden display.

In general, a home appliance such as a dishwashing machine, an oven, or a washing machine is provided with a body, a tub provided at an inside of the body having a front surface thereof open, a door rotatably coupled to the body as to open/close the open front surface of the tub, and a display configured to display operation information of the home appliance.

Among the home appliances such as the dishwashing machine, the oven, and the washing machine, a certain one of the home appliances may be provided with a structure having a display hiddenly provided at an inside of the door and configured such that the light radiated from the display is displayed at an outside through a front surface panel.

A penetration window formed with resin or glass as to have the light radiated from the display penetrated therethrough is formed at the front surface panel of the door of the home appliance having a conventional structure of the hidden display.

At this time, in a case when a remaining portion of the front surface panel other than the penetration window is formed in steel plate material, the penetration window and the remaining portion of the front surface panel are formed in different material with respect to each other, and thus sense of difference may be present while aesthetic sense is reduced.

EP1702551 discloses a domestic appliance having a combination of a decorative plate that is arranged before a front door of a household appliance and an optical display that is arranged in the appliance. A light conductor extends through an opening of the decorative plate and absorbs light from the display in such a manner that a signal produced by the display is visible for a user from outside, where the conductor is provided with a flexible section.

US5453586 discloses a dishwasher control panel assembly including an escutcheon which supports various controls. A switch mechanism is mounted on the inside of the escutcheon and the push buttons extend through a slot in the escutcheon. A liner overlies the outside of the escutcheon and the push buttons extend through a corresponding slot in the liner. A thin, flexible cover overlies the liner and has an outwardly projecting touch pad aligned with each push button. In their extended positions the push buttons bias the touch pads outwardly and the cover is sufficiently flexible for the touch pads to move inwardly enough to depress the push buttons.

Therefore, it is an aspect of the present disclosure to provide a home appliance formed of the same material of steel plate having a front surface panel provided without a separate penetration window, and provided with a door having improved aesthetic sense while a display unit is hidden at an inside of the door.

Additional aspects of the disclosure will be set forth in part in the description which follows and, in part, will be obvious from the description, or may be learned by practice of the disclosure.

In accordance with the present **disclosure,** a home appliance is provided according to claim 1.

The front surface panel and the rear surface panel may be formed of steel plate material.

The cover member may include epoxy resin.

The home appliance may further include an adhesive member configured to couple the display unit into a rear surface of the front surface panel.

The adhesive member may be provided at an outer periphery of the display film.

The adhesive member and the display film may be provided to have identical heights.

The guide member may include supporting walls protruded so as to support the printed circuit board and the cover member.

The display unit may further include a connector provided so as to penetrate the cover member such that a power may be supplied to the printed circuit board.

A diameter of the penetrating holes may be from about 0.3 mm to about 0.5 mm.

The gap between the penetrating holes may be from about 0.5 mm to about 1.5 mm.

The display unit may further include a filler member filled at the penetrating holes so as to prevent foreign substance from penetrating into the penetrating holes.

The filler member may be formed of transparent material or semi-transparent material.

In accordance with another aspect of the present disclosure, a home appliance includes a body, a tub provided inside the body and having a front surface thereof open, a door configured to open/close the front surface of the tub, and a hinge member configured to rotatably couple the door into the body. The door includes a front surface panel configured to form an exterior appearance of a front of the door, formed of steel plate material with penetrating holes such that light may penetrate therethrough, a rear surface panel coupled to the front surface panel so as to form a rear exterior appearance of the door, a handle provided at the front surface panel so as to enable the door to open and close, a display unit coupled to a rear surface of the front surface panel at a position corresponding with the penetrating holes of the front surface panel so as to display operation information through the penetrating holes of the front surface panel, and an adhesive member provided at a front surface edge of the display unit so as to attach the display unit at a rear surface of the front surface panel.

The rear surface panel may be formed of steel plate material.

The display unit includes a printed circuit board provided with at least one light emitting element installed thereto, a guide member configured to guide the light radiated from the at least one light emitting element, a display film having penetration portions corresponding with the penetrating holes of the front surface panel, and attached to the guide member, and a cover member provided at the guide member so as to prevent moisture from penetrating at the printed circuit board.

The display unit may further include a connector provided so as to penetrate the cover member such that a power may be supplied to the printed circuit board.

The guide member may include supporting walls protruded so as to support the printed circuit board and the cover member.

These and/or other aspects of the disclosure will become apparent and more readily appreciated from the following description of the embodiments, taken in conjunction with the accompanying drawings of which:
FIG. 1 is a schematic cross-sectional view illustrating a home appliance in accordance with one embodiment of the present disclosure.
FIG. 2 is a perspective view illustrating the home appliance of FIG. 1.
FIG. 3 is an exploded view illustrating a door of the home appliance of FIG. 1.
FIG. 4 is a drawing illustrating expended view of penetrating holes of the home appliance of FIG. 1.
FIG. 5 is a cross-sectional view taken along line A-A of FIG. 4.
FIG. 6 is an enlarged view illustrating a portion of FIG. 5.
FIG. 7 is a drawing illustrating a state of the penetrating holes of the home appliance of FIG. 1 filled with filler member.
FIG. 8 is an enlarged view illustrating a display unit of the home appliance of FIG. 1.

FIG. 9 is a perspective view illustrating a bottom surface of the display unit of the home appliance of FIG. 1.

Reference will now be made in detail to the embodiments of the present disclosure, examples of which are illustrated in the accompanying drawings, wherein like reference numerals refer to like elements throughout.

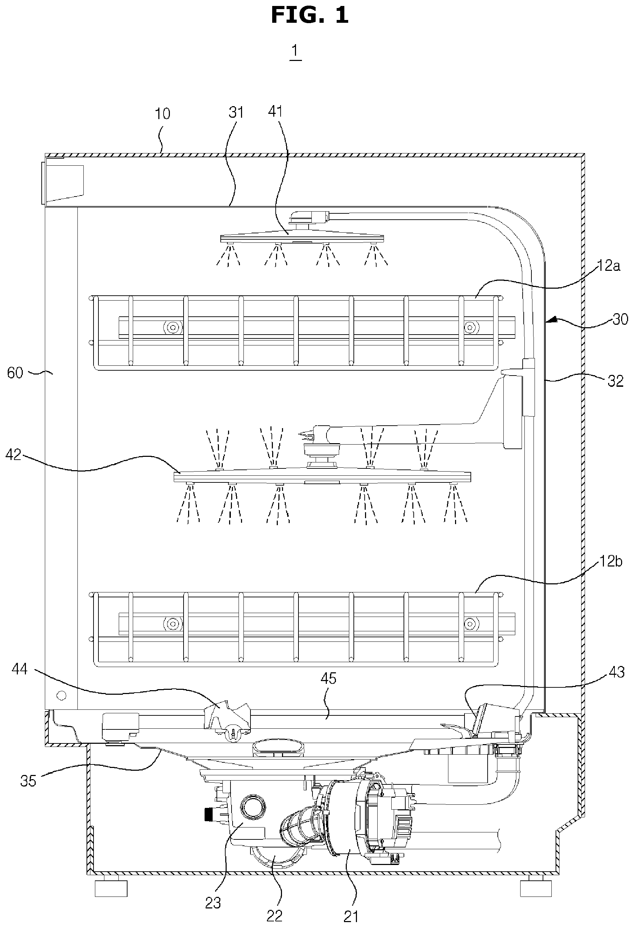

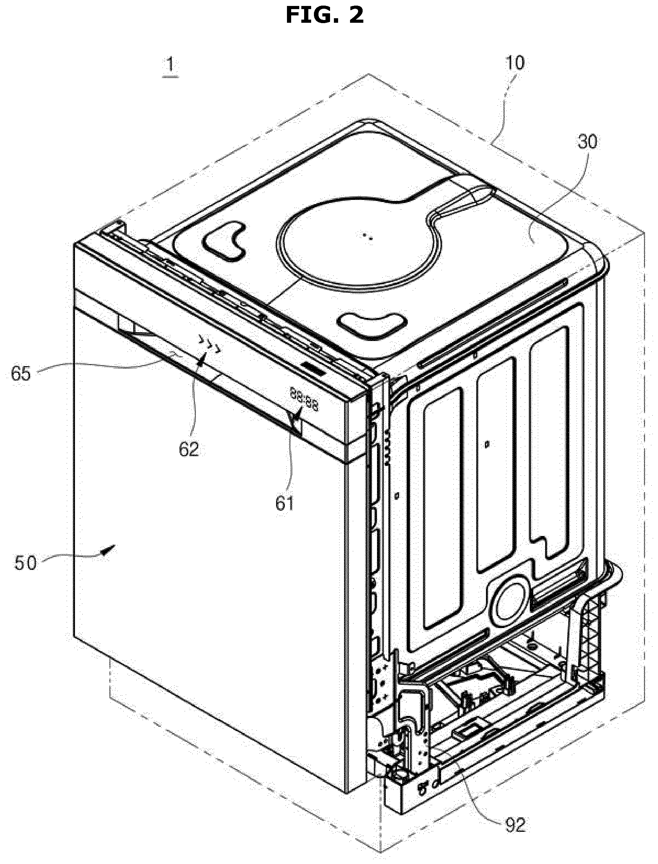

FIG. 1 is a schematic cross-sectional view illustrating a home appliance in accordance with one embodiment of the present disclosure, and FIG. 2 is a perspective view illustrating the home appliance of FIG. 1.

Hereinafter, an aspect of the present disclosure will be described by using a dishwashing machine as one embodiment of the present disclosure. However, the aspect of the present disclosure is not limited hereto, and may be applied to other home appliances such as an oven and a washing machine.

A dishwashing machine 1 includes a body 10 forming an exterior appearance, a tub 30 provided at an inside of the body 10, baskets 12a and 12b provided at an inside of the tub 30 as to store items, for example, tableware, spraying nozzles 41, 42, and 43 to spray washing water, a sump 23 to store the washing water, a circulation pump 21 to pump the washing water at the sump 23 to supply such to the spraying nozzles 41, 42, and 43, a draining pump 22 to discharge the washing water of the sump 23 along with garbage to an outside the body 10, a vane 44 to reflect the washing water toward a side of the tableware while moving at an inside of the tub 30, and a rail 45 to guide movements of the vane 44.

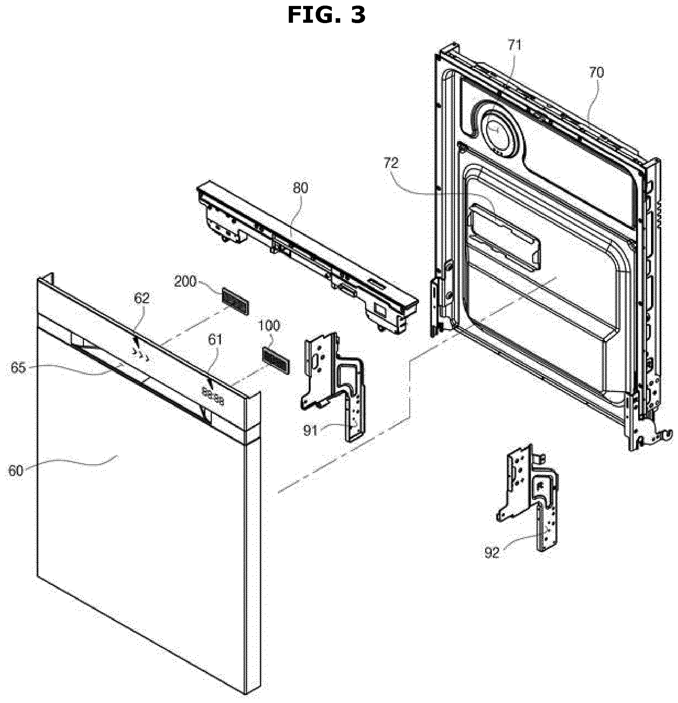

The tub 30 includes a washing tub to wash tableware. The tub 30 may be provided with the approximate shape of a box having a front thereof open as to deposit/withdraw the tableware. Thus, the tub 30 may be provided with an upper side wall 31, a rear side wall 32, a left side wall and a right side wall (not shown), and a bottom panel 35. The open front of the tub 30 may be opened/closed by use of a door 50. The door 50 may be rotatably coupled to the body 10 in vertical direction by use of hinge members 91 and 92 (FIG. 3) provided at both sides of a lower portion of the door 50.

The baskets 12a and 12b may be provided with a wire rack formed with wires such that remaining washing water may be penetrated. The baskets 12a and 12b may be detachably provided at an inside of the tub 30. The baskets 12a and 12b may include an upper basket 12a disposed at an upper portion of the tub 30 and a lower basket 12b disposed at a lower portion of the tub 30.

Display units 100 and 200 (FIG. 3) to display operation information of the home appliance may be disposed at an inside of the door 50. In addition, a handle 65 to open/close the door 50 by gripping the handle 62, as well as penetrating (penetration) holes 61 and 62 provided such that a user may be able to see the information displayed at the display units 100 and 200 as the light radiated from the display units 100 and 200 are penetrated through the penetrating holes 61 and 62, may be formed. The details of the structure of the door 50 as such will be described hereinafter.

FIG. 3 is an exploded view illustrating a door of the home appliance of FIG. 1.

Referring to FIG. 3, the door 50 (FIG. 2) may include a front surface panel 60 forming a front exterior appearance of the door 50, a rear surface panel 70 coupled to a rear of the front surface panel 60 and forming a rear exterior appearance of the door 50, and an upper cap 80 coupled to upper portions of the front surface panel 60 and the rear surface panel 70. A lower portion of the door 50 may be open as to have air flow at an inside of the door 50.

The front surface panel 60 may be formed of steel plate material as to improve aesthetic sense and durability. Furthermore, the front surface panel 60 of the dishwashing machine 1 in accordance with an embodiment of the present disclosure may be formed with single material of steel plate without requiring a penetration window to be formed of glass or resin material as to have the light radiated from the display units 100 and 200 penetrated through the penetration window, and thus aesthetic sense may be improved.

In place of the penetration window, the penetrating holes 61 and 62 are formed at the front surface panel 60 such that the light radiated from the display units 100 and 200 may penetrate the penetrating holes 61 and 62 as to have a user recognize the information displayed by the display units 100 and 200. The details with respect to the penetrating holes 61 and 62 will be described later.

The front surface panel 60 may be provided with an improved aesthetic sense through a surface treatment, which is a unique characteristic of metallic material. That is, hair line processing, a mirror processing, or bead blast processing may be performed on the surface of the front surface panel 60.

A handle 65 configured to be gripped as to open/close the door 50 may be provided at the front surface panel 60. The front surface panel 60 as such may be formed through a press processing or other steel plate processing methods.

Although not illustrated, a control panel (not shown) configured to control functions of the dishwashing machine 1 may be provided at a front surface of the front surface panel 60 or at an upper surface of the upper cap 80.

The rear surface panel 70 may be formed of steel plate material as in the front surface panel 60 as to prevent corrosion by washing water of the tub 30. The rear surface panel 70 may perform functions to support the baskets 12a and 12b withdrawn from the tub 30 when the door 50 is open, and to collect washing water so that the washing water stored at the baskets 12a and 12b may not fall to the bottom surface.

A detergent container accommodation unit 72 in which the detergent container (not shown) is accommodated may be formed at the rear surface panel 70. A duct connection part (71) to which a duct (not shown) configured to discharge the heat of the tub 30 to an outside at the time of drying the tub 30 is connected may be provided at the rear surface panel 70.

The rear surface panel 70 as such may be formed through a press processing or other steel plate processing methods.

The upper cap 80 is coupled to upper portions of the front surface panel 60 and the rear surface panel 70, and is provided to form an upper surface of the door 50. The upper cap 80 may be formed of resin material.

The display units 100 and 200 configured to display operation information of the dishwashing machine 1 may be disposed in between the front surface panel 60 and the rear surface panel 70. In detail, the display units 100 and 200 may be closely attached to a rear surface of the front surface panel 60.

The front surface panel 60 as such, the dispositions of the display units 100 and 200, and detailed structures of the display units 100 and 200 will be described in detail hereinafter.

The display units 100 and 200 may include a display unit 100 having a 7-segment shape as to display numeric information, and a display unit 200 having an arrow shape as to display information on a state of process. The structures of the display unit 100 and the display unit 200 may be identical, and thus the display unit 100 will only be described hereinafter.

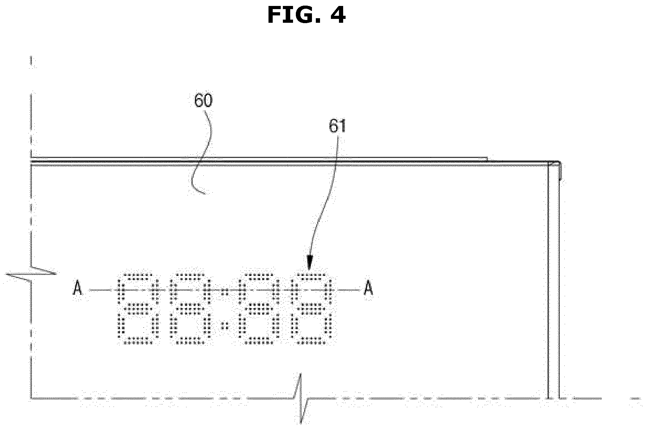

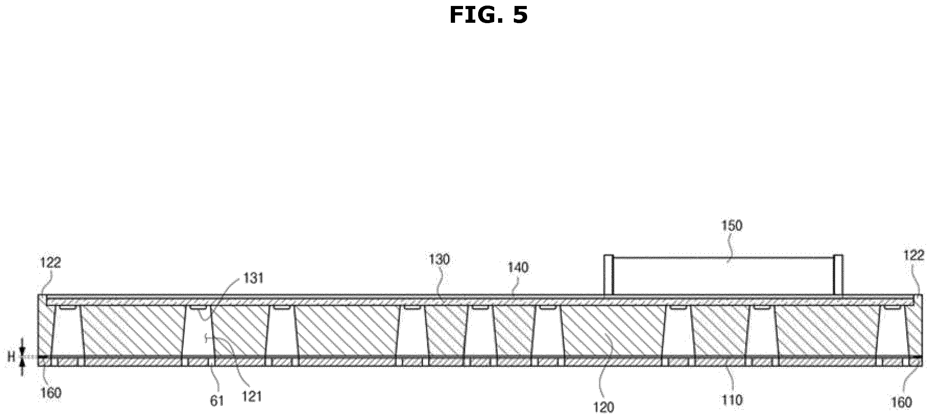

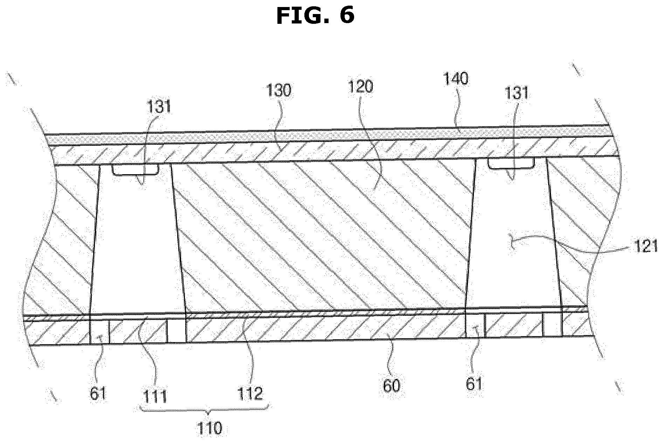

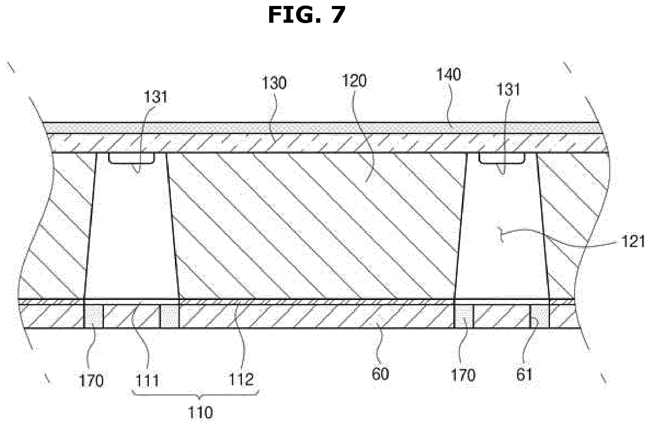

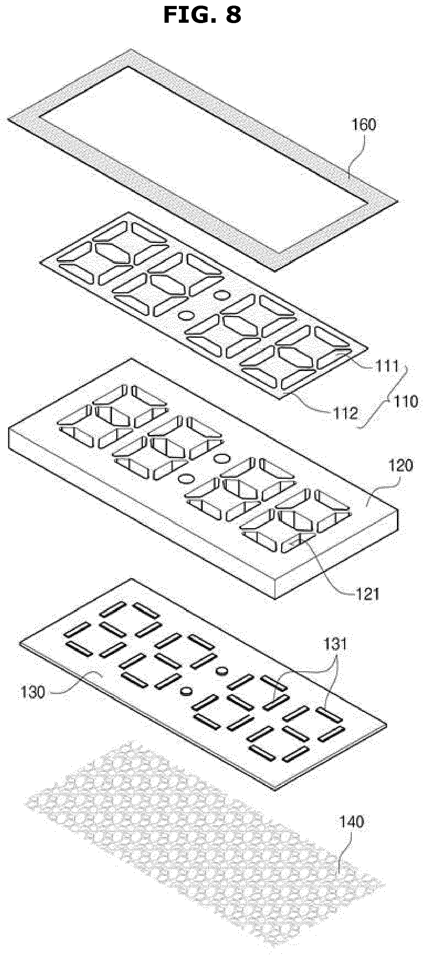

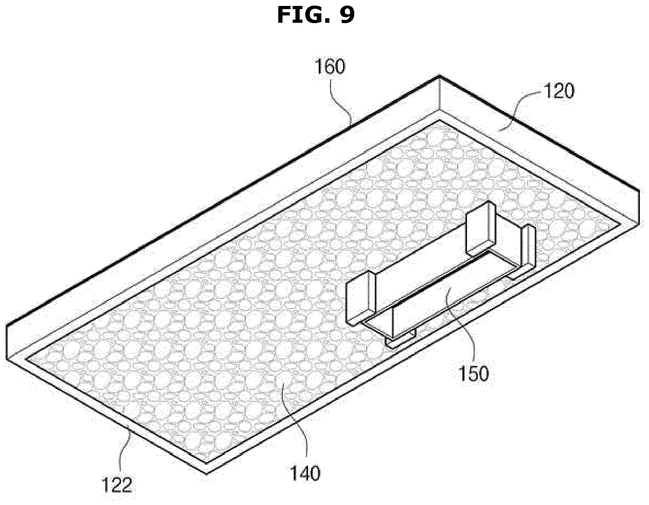

FIG. 4 is a drawing illustrating expended view of penetrating holes of the home appliance of FIG. 1, FIG. 5 is a cross-sectional view taken along line A-A of FIG. 4, FIG. 6 is an enlarged view illustrating a portion of FIG. 5, FIG. 7 is a drawing illustrating a state of the penetrating holes of the home appliance of FIG. 1 filled with filler member, FIG. 8 is an enlarged view illustrating a display unit of the home appliance of FIG. 1, and FIG. 9 is a perspective view illustrating a bottom surface of the display unit of the home appliance of FIG. 1.

Referring to FIG. 4, FIG. 5, FIG. 6, FIG. 7, FIG. 8 and FIG. 9, the display unit 100 may include a printed circuit board 130 provided with at least one light emitting element 131, a guide member 120 to guide the light radiated from the at least one light emitting element 131, a display film 110 attached to a front surface of the guide member 120, and a cover member 140 provided at a rear of the guide member 120 as to prevent moisture from penetrating at the printed circuit board 130.

The light emitting element 131 may include a LED. The at least one light emitting element 131 may be individually controlled.

The guide member 120 may be integrally formed with resin material. The guide member 120 may include a guide path 121 to guide the light radiated from the light emitting element 131 toward a side of the display film 110, and supporting walls 122 protruded toward a rear side as to support the printed circuit board 130 and the cover member 140.

The supporting walls 122 may be formed at four borders as to support the printed circuit board 130 and the cover member 140.

The guide path 121 may be inclinedly formed such that the radius thereof is increased toward the display film 110. At least one light emitting element 131 may be disposed at the each guide path 121.

The printed circuit board 130 and the cover member 140 may be disposed in between the guide member 120 and the supporting walls 122.

The display film 110 may include a penetration portion 111 formed of transparent material or semi-transparent material as to penetrate light, and a non-penetration portion 112 formed of non-transparent material as not to penetrate light.

The penetration portion 111 may be provided with a predetermined design formed thereto as to display information of the dishwashing machine 1. As one example, the penetration portion 111 may be provided with 7 segments as to display numeric information.

The penetration portion 111 as such is disposed at a position corresponding to the penetrating holes 61 of the front surface panel 60 of the door 50, and may be provided as to occupy an area that is larger than the shape that the penetrating holes 61 form. By use of the structure as such, the light radiated form the light emitting element 131 as the light emitting element 131 is turned on and off is penetrated through the guide path 121 of the guide member 120, and after passing through the penetrating holes 61 of the front surface panel 60, the light may be exposed to an outside the door 50, and a user may be able to recognize the display information.

As the above, the display film 110 is attached to the front surface of the guide member 120, the penetration of moisture and foreign substance to the printed circuit board 130 through a front entrance of the guide path 121 is prevented, and the penetration of moisture and foreign substance to the penetrating holes 61 of the front surface panel 60 may be prevented.

The display film 110 as such may be integrally formed at the guide member 120.

The penetrating holes 61 of the front surface panel 60 may be formed through an etching processing or a laser drilling processing. The penetrating holes 61 of the front surface panel 60 each may be provided with a diameter of from about 0.3 mm to about 0.5 mm. In addition, the penetrating holes 61 of the front surface panel 60 each may be arranged with a gap of between 0.5 mm and about 1.5 mm with respect to each other.

The penetrating holes 61 as such each may be provided with a predetermined shape as to correspond with respect to the shape of the penetration portion 111 of the display film 110.

The cover member 140 is configured to perform roles to prevent penetration of moisture and foreign substance through a rear side of the display unit 100 to the printed circuit board 130 and to fix the printed circuit board 130 to the guide member 120.

The cover member 140 may be of epoxy resin. The cover member 140 may be formed after disposing the printed circuit board 130 in between the supporting walls 122 of the guide member 120 and then molding epoxy resin at a rear of the printed circuit board 130.

The display unit 100 may further include a connector 150 connected to the printed circuit board 130 as to supply a power to the printed circuit board 130. The connector 150 as such may be exposed to an outside the display unit 100 after penetrating through the cover member 140. Epoxy resin may be molded after connecting the connector 150 to the printed circuit board 130.

As the above, as the cover member 140 is provided at a rear of the display unit 100, the penetration of moisture and foreign substance to the printed circuit board 130 is prevented, and thus the reliability of the display unit 100 may be improved.

The display unit 100 as such may be attached to a lower surface of the front surface panel 60 by use of an adhesive member 160. The adhesive member 160 may be provided at an edge of a front surface of the guide member 120. That is, the adhesive member 160 may be provided at an outer periphery of the display film 110 attached at a front surface of the guide member 120.

The adhesive member 160 and the display unit 100 are preferred to be formed at identical heights 'H' (FIG. 5) as to closely attach the display unit 100 and the front surface panel 60. By closely attaching the display unit 100 and the front surface panel 60, the adhesive member 160 may be able to prevent the penetration of moisture to the penetrating holes 61 of the front surface panel 60 and the printed circuit board 130 of the display unit 100.

The adhesive member 160 may be of a double-sided tape.

As the above, as the display unit 100 is attached to the front surface panel 60 by use of the adhesive member 160, the assembly of the display unit 100 may be easily performed, and the number of parts and material costs may be reduced.

However, differently from the present embodiment, in place of the adhesive member 160, by use of a separate supporting structure, the display unit 100 may be coupled to a lower surface of the front surface panel 60.

As illustrated on FIG. 7, a predetermined filler member 170 may be filled into the penetrating holes 61 of the front surface panel 60 as to prevent the difficulty of light penetrating through the penetrating holes 61, in a case the penetrating holes 61 may be blocked as a result of penetration of foreign substance.

The filler member 170 as such may be formed of transparent material or semi-transparent material. The filler member 170 may be of silicon resin or UV resin. The filler member 170 may be filled into the penetrating holes 61 by use of a method of applying silicon or UV paint at the front surface panel 60.

As is apparent from the above, a front surface panel of a door of a home appliance is formed of single material of steel plate, a display unit is hidden at an inside of the door, and the light radiated from the display unit may be displayed at an outside through penetrating holes formed at the front surface panel. According to an embodiment, a method of controlling light from a display unit inside a door is provided to display information on a front surface panel of the door. Thus, an exterior appearance design can be improved.

In addition, the display unit includes a cover member configured to prevent moisture from penetrating into a printed circuit board, such that a malfunction of a display due to the penetration of the moisture of a tub at the printed circuit board can be prevented.

In addition, the display unit is attached to a rear surface of the front surface panel through an adhesive member, and thus an assembly structure can be simplified, while the number of parts and costs can be reduced.

As discussed, embodiments of the invention can provide a home appliance, comprising: a body; a tub provided inside the body and having a front surface thereof open; a door rotatably provided so as to open and close the tub, having a front surface panel, and a rear surface panel, the front surface panel being provided with penetrating (penetration) holes so as to have light penetrated therethrough; and a display unit provided inside the door to display operation information through the penetrating holes of the front surface panel, wherein the display unit comprises: a printed circuit board provided with at least one light emitting element; a guide member arranged to guide light radiated from the at least one light emitting element; a display film having penetration portions corresponding with the penetrating holes of the front surface panel, and attached to the guide member; and a cover member provided at the guide member so as to prevent moisture from penetrating into the printed circuit board. Although a few embodiments of the present disclosure have been shown and described, it would be appreciated by those skilled in the art that changes may be made in these embodiments without departing from the scope of the invention which is defined in the claims.

## Claims

1. A home appliance (1), comprising:
a body (10);
a tub (30) provided inside the body (10) and having a front surface thereof open;
a door (50) rotatably provided so as to open and close the tub (30), having a front surface panel (60), and a rear surface panel (70), the front surface panel (60) being provided with penetrating holes (61, 62) so as to have light penetrated therethrough; and
a display unit (100, 200) provided inside the door (50) to display operation information through the penetrating holes (61, 62) of the front surface panel (60),
wherein the display unit (100, 200) comprises:
a printed circuit board (130) provided with at least one light emitting element (131);
a guide member (120) arranged to guide light radiated from the at least one light emitting element (131);
a display film (110) having penetration portions (111) corresponding with the penetrating holes (61, 62) of the front surface panel (60), and attached to the guide member (120); and
a cover member (140) provided at the guide member (120) and disposed at a rear surface of the printed circuit board (130) and arranged to prevent moisture from penetrating into the printed circuit board (130).

2. The home appliance (1) of claim 1, wherein:
the front surface panel (60) and the rear surface panel (70) are formed of steel plate material.

3. The home appliance (1) of claim 1 or 2, wherein:
the cover member (140) comprises epoxy resin.

4. The home appliance (1) of any one of claims 1 to 3, further comprising:
an adhesive member (160) arranged to couple the display unit (100, 200) to a rear surface of the front surface panel (60).

5. The home appliance (1) of claim 4, wherein:
the adhesive member (160) is provided at an outer periphery of the display film (110).

6. The home appliance (1) of claim 5, wherein:
the adhesive member (160) and the display film (110) are provided to have identical heights.

7. The home appliance (1) of any one of claims 1 to 6, wherein:
the guide member (120) comprises supporting walls (122) protruded so as to support the printed circuit board (130) and the cover member (140).

8. The home appliance (1) of any one of claims 1 to 7, wherein:
the display unit (100, 200) further comprises a connector (150) provided so as to penetrate the cover member (140) such that a power is supplied to the printed circuit board (130).

9. The home appliance (1) of any one of claims 1 to 8, wherein:
a diameter of the penetrating holes (61, 62) is from about 0.3 mm to about 0.5 mm.

10. The home appliance (1) of any one of claims 1 to 9, wherein:
a gap between the penetrating holes (61, 62) is between about 0.5 mm and about 1.5 mm.

11. The home appliance (1) of any one of claims 1 to 10, wherein:
the display unit (100, 200) further comprises a filler member (170) filled in the penetrating holes (61, 62) so as to prevent foreign substance from penetrating into the penetrating holes (61, 62).

12. The home appliance (1) of claim 11, wherein:
the filler member (170) is formed of transparent material or semi-transparent material.

## Patentansprüche

1. Haushaltsgerät (1), das aufweist:
einen Körper (10);
einen Bottich (30), der in dem Körper (10) bereitgestellt ist und der an einer Stirnfläche davon offen ist;
eine Tür (50), die drehbar bereitgestellt ist, um den Bottich (30) zu öffnen und zu verschließen, mit einer Vorderseitenplatte (60) und einer Rückseitenplatte (70), wobei die Vorderseitenplatte (60) mit durchdringenden Löchern (61, 62) versehen ist, um Licht durch sie hindurchdringen zu lassen; und
eine Anzeigeeinheit (100, 200), die im Inneren der Tür (50) bereitgestellt ist, um Betriebsinformationen durch die durchdringenden Löcher (61, 62) an der Vorderseitenplatte (60) anzuzeigen,
wobei die Anzeigeeinheit (100, 200) aufweist:
eine Platine (130), die mit wenigstens einem lichtemittierenden Element (131) versehen ist;
ein Leitelement (120), das angeordnet ist, um von dem wenigstens einen lichtemittierenden Element (131) ausgestrahltes Licht zu leiten;
eine Anzeigefolie (110), die Durchdringungsteile (111) hat, die den durchdringenden Löchern (61, 62) der Vorderseitenplatte (60) entsprechen, und am Leitelement (120) angebracht ist; und
ein Abdeckungselement (140), das am Leitelement (120) bereitgestellt ist und an einer Rückseitenfläche der Platine (130) positioniert ist und zum Verhindern, dass Feuchtigkeit in die Platine (130) eindringt, angeordnet ist.

2. Haushaltsgerät (1) nach Anspruch 1, wobei:
die Vorderseitenplatte (60) und die Rückseitenplatte (70) aus Stahlblechmaterial hergestellt sind.

3. Haushaltsgerät (1) nach Anspruch 1 oder 2, wobei:
das Abdeckungselement (140) Epoxidharz umfasst.

4. Haushaltsgerät (1) nach einem der Ansprüche 1 bis 3, das ferner aufweist:
ein Klebeelement (160), das zum Anfügen der Anzeigeeinheit (100, 200) an einer Rückseitenfläche der Vorderseitenplatte (60) angeordnet ist.

5. Haushaltsgerät (1) nach Anspruch 4, wobei:
das Klebeelement (160) an einem Außenrand der Anzeigefolie (110) bereitgestellt ist.

6. Haushaltsgerät (1) nach Anspruch 5, wobei:
das Klebeelement (160) und die Anzeigefolie (110) so bereitgestellt sind, dass sie eine identische Höhe haben.

7. Haushaltsgerät (1) nach einem der Ansprüche 1 bis 6, wobei:
das Leitelement (120) tragende Wände (122) aufweist, die vorgekragt sind, um die Platine (130) und das Abdeckungselement (140) zu tragen.

8. Haushaltsgerät (1) nach einem der Ansprüche 1 bis 7, wobei:
die Anzeigeeinheit (100, 200) ferner einen Verbinder (150) aufweist, der bereitgestellt ist, um das Abdeckungselement (140) zu durchdringen, so dass die Platine (130) mit einer Energie versorgt wird.

9. Haushaltsgerät (1) nach einem der Ansprüche 1 bis 8, wobei:
ein Durchmesser der durchdringenden Löcher (61, 62) von etwa 0,3 mm bis etwa 0,5 mm ist.

10. Haushaltsgerät (1) nach einem der Ansprüche 1 bis 9, wobei:
ein Abstand zwischen den durchdringenden Löchern (61, 62) zwischen etwa 0,5 mm und etwa 1,5 mm ist.

11. Haushaltsgerät (1) nach einem der Ansprüche 1 bis 10, wobei:
die Anzeigeeinheit (100, 200) ferner ein in die durchdringenden Löcher (61, 62) eingefülltes Füllstück (170) aufweist, um Fremdstoffe am Eindringen in die eindringenden Löcher (61, 62) zu verhindern.

12. Haushaltsgerät (1) nach Anspruch 11, wobei:
das Füllstück (170) aus transparentem Material oder halbtransparentem Material hergestellt ist.

## Revendications

1. Appareil domestique (1), comprenant :
un corps (10) ;
une cuve (30) située à l'intérieur du corps (10) et comportant une surface avant correspondante ouverte ;
une porte (50) montée en rotation pour permettre l'ouverture et la fermeture de la cuve (30), et comportant un panneau de surface avant (60) et un panneau de surface arrière (70), le panneau de surface avant (60) étant muni d'orifices de pénétration (61, 62) permettant à la lumière d'y pénétrer ; et
une unité d'affichage (100, 200) située à l'intérieur de la porte (50) pour afficher des informations de fonctionnement par les orifices de pénétration (61, 62) du panneau de surface avant (60),
l'unité d'affichage (100, 200) comprenant :
une carte de circuit imprimé (130) muni d'au moins un élément électroluminescent (131) ;
un élément de guidage (120) conçu pour guider la lumière émise par l'au moins un élément électroluminescent (131) ;
un film d'affichage (110) comportant des parties de pénétration (111) correspondant aux orifices de pénétration (61, 62) du panneau de surface avant (60), et fixées à l'élément de guidage (120) ; et
un élément de couverture (140) situé au niveau de l'élément de guidage (120) et disposé au niveau d'une surface arrière de la carte de circuit imprimé (130) et conçu pour empêcher l'humidité de pénétrer dans la carte de circuit imprimé (130).

2. Appareil domestique (1) selon la revendication 1, dans lequel :
le panneau de surface avant (60) et le panneau de surface arrière (70) sont constitués d'un matériau de tôle d'acier.

3. Appareil domestique (1) selon la revendication 1 ou 2, dans lequel :
l'élément de couverture (140) comprend une résine époxy.

4. Appareil domestique (1) selon l'une quelconque des revendications 1 à 3, comprenant en outre :
un élément adhésif (160) conçu pour accoupler l'unité d'affichage (100, 200) à une surface arrière du panneau de surface arrière (60).

5. Appareil domestique (1) selon la revendication 4, dans lequel :
l'élément adhésif (160) est situé au niveau d'une périphérie extérieure du film d'affichage (110).

6. Appareil domestique (1) selon la revendication 5, dans lequel :
l'élément adhésif (160) et le film d'affichage (110) sont fournis avec des hauteurs identiques.

7. Appareil domestique (1) selon l'une quelconque des revendications 1 à 6, dans lequel :
l'élément de guidage (120) comprend des parois de support (122) faisant saillie de manière à supporter la carte de circuit imprimé (130) et l'élément de couverture (140).

8. Appareil domestique (1) selon l'une quelconque des revendications 1 à 7, dans lequel :
l'unité d'affichage (100, 200) comprend en outre un connecteur (150) installé de manière à pénétrer l'élément de couverture (140) de sorte qu'un courant soit fourni à la carte de circuit imprimé (130).

9. Appareil domestique (1) selon l'une quelconque des revendications 1 à 8, dans lequel :
un diamètre des orifices de pénétration (61, 62) est compris entre environ 0,3 mm et environ 0,5 mm.

10. Appareil domestique (1) selon l'une quelconque des revendications 1 à 9, dans lequel :
un espace entre les orifices de pénétration (61, 62) est compris entre environ 0,5 mm et environ 1,5 mm.

11. Appareil domestique (1) selon l'une quelconque des revendications 1 à 10, dans lequel :
l'unité d'affichage (100, 200) comprend en outre un élément de remplissage (170) remplissant les orifices de pénétration (61, 62) afin d'empêcher une substance étrangère de pénétrer dans les orifices de pénétration (61, 62) .

12. Appareil domestique (1) selon la revendication 11, dans lequel :
l'élément de remplissage (170) est formé d'un matériau transparent ou d'un matériau semi-transparent.
